# FASCICULE DE BREVET EUROPEEN

(11) **EP 0 800 160 B1**
(45) Date de publication et mention de la délivrance du brevet: **05.11.2003**
(21) Numéro de dépôt: 97400760.1
(22) Date de dépôt: 02.04.1997
(51) Int. Cl.: G11B 5/31, G11B 5/48, G11B 5/265

(54) **Procédés de réalisation d'une tête magnétique double à entrefers d'azimuts opposés**
Herstellungsverfahren für einen Doppel-Magnetkopf mit entgegengesetzten Azimuth-Spalten
Method for manufacturing a double magnetic head with opposite gap-azimuth

(30) Priorité: 04.04.1996 FR 9604241
(43) Date de publication de la demande: 08.10.1997
(73) Titulaire: COMMISSARIAT A L'ENERGIE ATOMIQUE, 75015 Paris Cédex 15 (FR)
(72) Inventeur: Albertini, Jean-Baptiste, 38100 Grenoble (FR); Barrois, Gérard, 38120 Le Fontanil (FR); Gaud, Pierre, 38400 Coublevie (FR); Sibuet, Henri, 38120 Le Fontanil (FR)
(74) Mandataire: Poulin, Gérard

(56) Documents cités:
- EP-A- 0 233 086
- EP-A- 0 614 173
- PATENT ABSTRACTS OF JAPAN vol. 013, no. 203 (P-870), 15 Mai 1989 & JP 01 023413 A (SANYO ELECTRIC CO LTD), 26 Janvier 1989,
- PATENT ABSTRACTS OF JAPAN vol. 010, no. 254 (P-492), 30 Août 1986 & JP 61 080509 A (TOKYO ELECTRIC CO LTD), 24 Avril 1986,
- PATENT ABSTRACTS OF JAPAN vol. 009, no. 157 (P-369), 2 Juillet 1985 & JP 60 035313 A (CANON KK;OTHERS: 01), 23 Février 1985,
- PATENT ABSTRACTS OF JAPAN vol. 018, no. 172 (P-1715), 23 Mars 1994 & JP 05 334627 A (MITSUBISHI ELECTRIC CORP), 17 Décembre 1993,
- PATENT ABSTRACTS OF JAPAN vol. 010, no. 334 (P-515), 13 Novembre 1986 & JP 61 137214 A (HITACHI LTD), 24 Juin 1986,
- PATENT ABSTRACTS OF JAPAN vol. 95, no. 011 & JP 07 296325 A (SONY CORP), 10 Novembre 1995,
- PATENT ABSTRACTS OF JAPAN vol. 009, no. 262 (P-398), 19 Octobre 1985 & JP 60 111311 A (SANYO DENKI KK), 17 Juin 1985,
- ADAMS A.C.; CAPIO C.D.: 'Planarisation of phosphorus-doped silicon dioxide' JOURNAL OF THE ELECTROCHEMICAL SOCIETY vol. 128, no. 2, Février 1981, pages 423 - 429, XP000841663

## Description

### Domaine technique

La présente invention a pour objet des procédés de réalisation d'une tête magnétique double à entrefers d'azimuts opposés. Elle trouve une application dans l'enregistrement magnétique d'informations, notamment dans l'enregistrement vidéo grand public ou professionnel, dans les mémoires de masse en informatique, dans le stockage des données sur bande ou sur disque, etc...

### Etat de la technique

Un support d'enregistrement magnétique pour enregistrement vidéo, sauvegarde de données ou mémoire d'ordinateur, comprend de nombreuses pistes sur lesquelles sont inscrites des informations sous forme de domaines magnétiques.

Pour augmenter la densité d'informations, on augmente non seulement le nombre d'informations par unité de longueur, mais encore le nombre de pistes. Pour cela, on diminue la largeur des pistes, et, simultanément, l'intervalle les séparant, jusqu'à rendre les pistes jointives.

Pour éviter tout problème de diaphonie à la lecture, les informations sont écrites sur deux pistes adjacentes de manière inclinée avec des angles d'inclinaison opposés. Ces angles d'inclinaison sont appelés angles d'azimut. L'entrefer de la tête de lecture doit alors présenter un azimut dont la valeur correspondant à l'inclinaison de l'enregistrement. L'azimut de l'entrefer de la tête doit être très précis (par exemple 20±0,15° dans le nouveau standard dit DVC pour "Digital Video Cassette").

La figure 1 annexée montre ainsi un support d'enregistrement avec deux pistes 10a et 10b dont les directions d'écriture par l'entrefer (représentées par des traits obliques) font, avec la normale à la direction générale des pistes, des angles d'azimut +i pour la piste 10a et -i pour la piste 10b.

La figure 2 annexée montre deux têtes magnétiques 12a, 12b avec des entrefers 14a, 14b présentant des angles d'azimut, respectivement égaux à +i et -i. La direction de déplacement de ces têtes est marquée D.

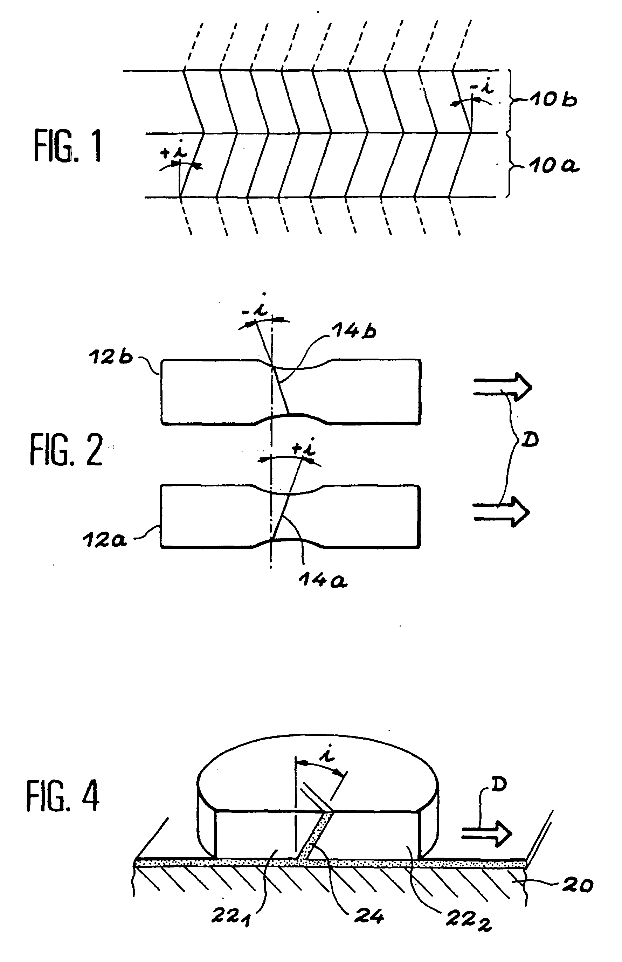

En réalité, un ensemble à deux têtes azimutées dans des sens opposés ne se présente généralement pas sous la forme de deux têtes juxtaposées comme sur la figure 2, sinon les pistes lues ne seraient pas jointives. Il se présente sous la forme de deux têtes décalées l'une par rapport à l'autre, comme illustré sur la figure 3. Ce montage permet, en effet, de resserrer les pistes. Dans ce montage, les deux têtes 16a, 16b présentent chacune un entrefer azimuté de largeur totale L, les deux entrefers étant séparés par une distance T. Chaque tête peut alors survoler une piste d'enregistrement, de largeur e, ces pistes étant quasi-jointives. On peut avoir par exemple L=7 microns, T=550 microns, e=6,7 microns.

Les deux têtes magnétiques 16a, 16b comprennent des moyens non représentés, comme un circuit magnétique et un bobinage conducteur. L'ensemble de tous ces moyens forme une tête double à azimuts opposés, qui porte la référence générale 18 sur la figure 3. Son sens de déplacement est encore symbolisé par la flèche D.

Pour obtenir une telle tête double, on réalise généralement deux têtes indépendantes ayant des entrefers inclinés dans des sens opposés et l'on monte ces deux têtes sur un support unique. Une tête magnétique à azimut est représentée à titre d'exemple sur la figure 4. On y voit un substrat monocristallin 20, deux pièces polaires 22₁, 22₂ séparées par un entrefer amagnétique 24, lequel est incliné d'un angle i. Cette inclinaison est obtenue par exemple en tirant profit du caractère monocristallin du substrat et en réalisant une gravure anisotrope selon un plan cristallographique du substrat. Ce procédé est décrit dans le document FR-A-2 664 729 (ou WO-92/02015).

Le document de brevet européen EP-A-0 233 086 décrit un autre procédé de réalisation d'une tête magnétique double à entrefers d'azimuts opposés à partir de deux têtes magnétiques qui sont collées l'une au-dessous de l'autre.

Ce procédé de réalisation de têtes doubles, consistant à regrouper deux têtes simples, ne donne pas satisfaction. En effet, il est difficile d'orienter correctement les deux têtes pour que leurs entrefers présentent bien chacune les azimuts souhaités et il est également difficile de placer correctement les deux têtes l'une par rapport à l'autre, pour que chacune d'elles coopèrent correctement avec des pistes. Les dimensions données à propos de la figure 3, en particulier la largeur de 6,7 microns, montrent, en effet, qu'il s'agit là de réglages extrémement fins.

Toutes ces difficultés de montage entraînent un surcoût non négligeable par rapport au coût d'une tête simple.

A ces difficultés d'alignement s'ajoute un problème lié à l'encombrement des têtes, qui rend difficile le rapprochement des entrefers pour avoir un bon contact entre la bande et chaque tête (la zone de "bon contact" est très localisée). On aurait également intérêt à minimiser la distance séparant les deux têtes pour simplifier l'écriture des deux pistes adjacentes sans perte de place (liée au décalage spatial) en début et fin de piste. En effet, pour éviter une perte de place dans le stockage d'information au début et à la fin de la piste, il faut désynchroniser l'écriture d'une tête par rapport à l'autre pour compenser le décalage spatial entre les deux têtes. Il faut donc trouver un compromis entre la simplicité de l'enregistrement et la compacité du stockage de l'information.

Les têtes utilisant la technologie des couches minces et la microélectronique offrent certainement des avantages intéressants, mais la réalisation, sur un même substrat, de deux angles d'azimuts opposés, dans une telle technologie est un problème difficile qui n'est pas résolu pour l'instant de manière satisfaisante.

La présente invention a justement pour but de proposer un procédé de réalisation de têtes magnétiques doubles utilisant cette technologie des couches minces et de la microélectronique et conduisant à un montage très simple et à un réglage automatique de la position et de l'orientation des têtes.

### Exposé de l'invention

Selon l'invention, on réalise d'abord sur un même substrat, ou sur deux substrats indépendants, des têtes magnétiques selon une technologie en couches minces. Ces têtes sont réparties en deux groupes. Les têtes de chaque groupe comportent un entrefer présentant une même inclinaison donnant lieu à une écriture avec un angle d'azimut identique. De plus, les angles d'azimut des têtes de chacun des deux groupes sont opposés. Dans le cas de l'utilisation d'un même substrat, on peut disposer les têtes des deux groupes tête-bêche, c'est-à-dire que certaines têtes ont leur pôle (c'est-à-dire la face destinée à être placée en regard du support d'enregistrement) dirigé dans un sens et les autres ont leur pôle dirigé dans un autre sens. Dans ce cas, les entrefers, qui sont inclinés, présentent la même inclinaison dans un référentiel commun dans les deux groupes de têtes. Dans le cas de l'utilisation de deux substrats, on oriente avantageusement ces derniers de façon à ce que leurs axes cristallographiques soient parallèles. On se retrouve alors dans le même cas que l'utilisation d'un même substrat. Dans tous les cas (utilisation d'un ou de deux substrats), on ménage en outre, à côté de chaque tête d'un groupe, un logement en creux apte à recevoir une tête de l'autre groupe. En prenant une tête d'un groupe, en la retournant, et en l'appliquant dans le logement prévu à cet effet à côté d'une tête de l'autre groupe, on obtient un ensemble à double tête. Le retournement d'une tête a pour effet de changer le signe de l'inclinaison de son entrefer et ainsi de créer un angle d'azimut opposé à celui de la tête qui n'a pas tourné, de sorte qu'on obtient deux têtes disposées côte-à-côte avec des azimuts opposés. Si les dimensions et l'emplacement des logements ont été bien conçus, les deux têtes se trouvent automatiquement orientées et positionnées l'une par rapport à l'autre dans leurs logements respectifs.

L'invention s'applique aussi bien aux cas où l'on ne souhaite réaliser qu'une seule tête double qu'au cas, plus fréquent, où l'on souhaite mettre en oeuvre un procédé collectif.

De façon précise, dans le cas d'une réalisation individuelle, le procédé de l'invention est essentiellement caractérisé par le fait qu'il comprend les opérations de la revendication 1.

Dans le cas d'une réalisation collective, le procédé de l'invention est caractérisé par le fait qu'il comprend les opérations de la revendication 3.

De manière avantageuse, les premières têtes de la barrette et les secondes têtes de la contre-barrette sont disposées en deux rangées parallèles, en position tête-bêche et en quinconce, les premiers et les seconds angles d'inclinaison étant alors identiques dans un référentiel commun avant l'étape de retournement. Ce mode de réalisation est particulièrement avantageux lorsque le premier substrat servant à réaliser la barrette et le second substrat servant à réaliser la contre-barrette sont un seul et même substrat.

Ce procédé de réalisation collectif de l'invention s'applique aussi bien à la réalisation de têtes doubles à partir d'un traitement par barrettes qu'à partir d'un traitement par plaques entières.

### Brève description des dessins

- la figure 1, déjà décrite, montre deux pistes adjacentes d'enregistrement ;
- la figure 2, déjà décrite, montre deux têtes à azimuts opposés ;
- la figure 3, déjà décrite, montre un ensemble de deux têtes décalées ;
- la figure 4, déjà décrite, montre un détail d'une tête connue à entrefer azimuté ;

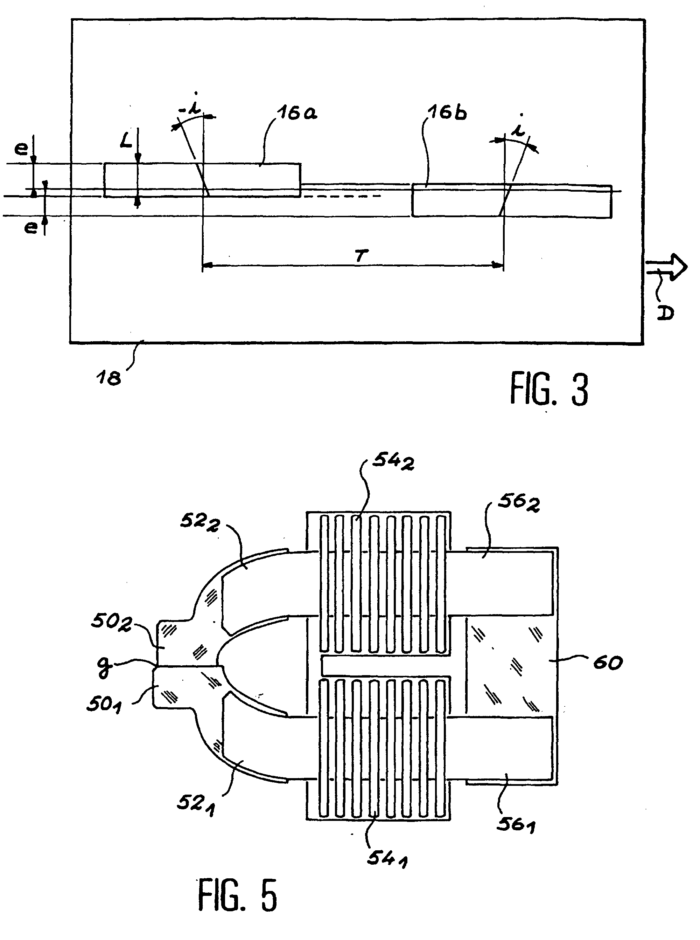

- la figure 5 illustre schématiquement, en vue de dessus, une tête magnétique à bobinage enroulé autour du circuit magnétique ;

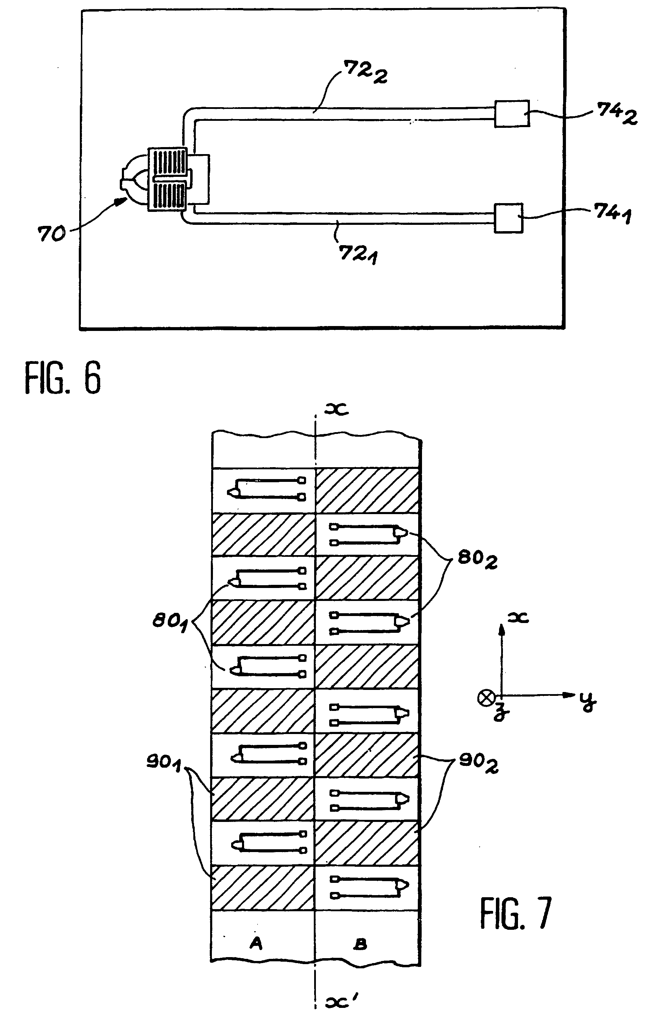

- la figure 6 illustre schématiquement, en vue de dessus, une tête magnétique avec ses connexions de bobinage et ses plots de contact ;
- la figure 7 illustre schématiquement le procédé de l'invention ;

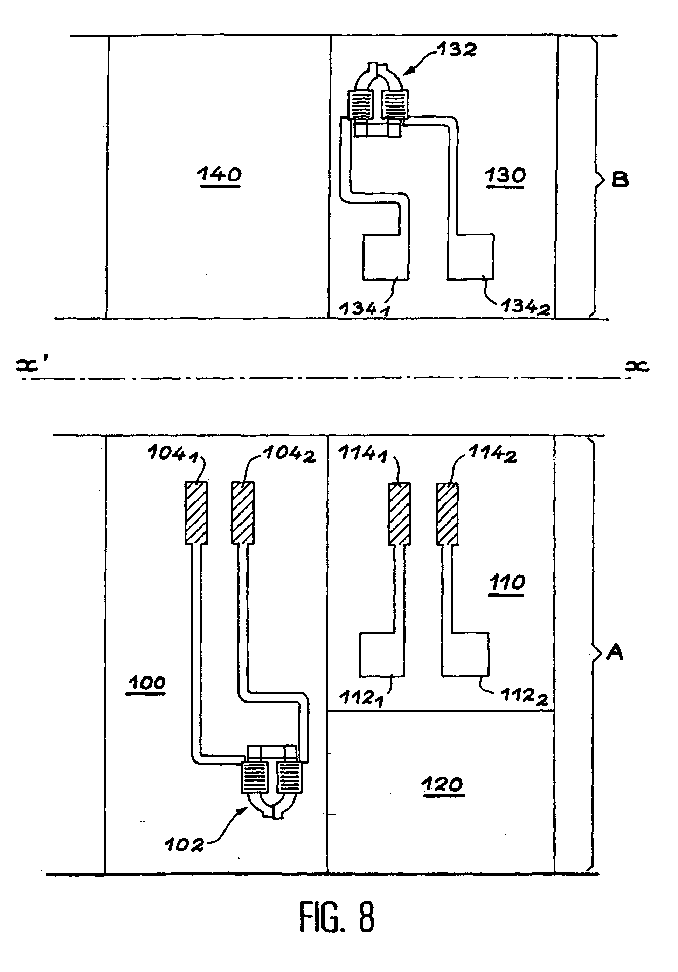

- la figure 8 montre, en vue de dessus, les têtes, connexions, plots de contact et gravures de la barrette et de la contre-barrette ;

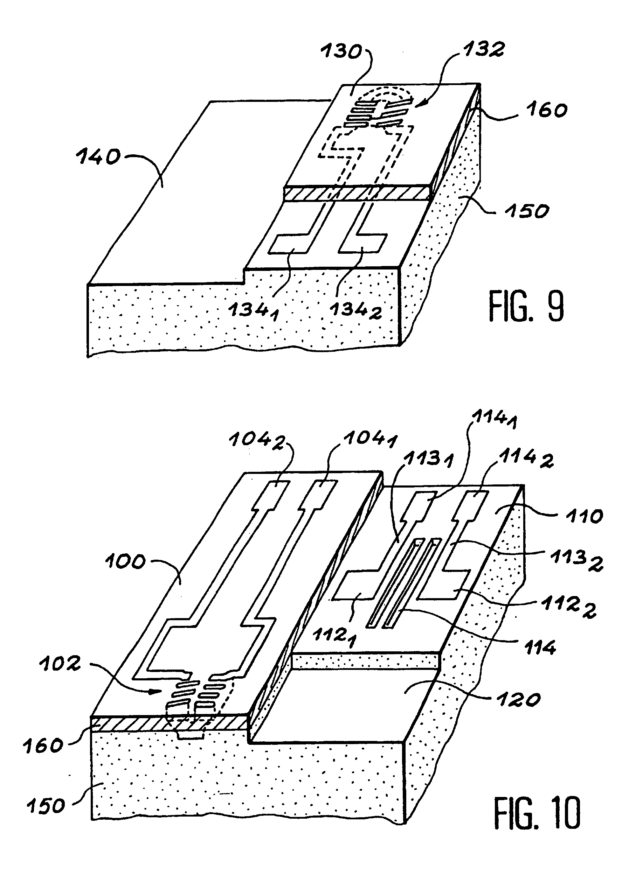

- la figure 9 montre, en perspective, une partie de la barrette et une partie de la contre-barrette ;
- la figure 10 montre la zone des entrefers azimutés d'une tête double obtenue par le procédé de l'invention.

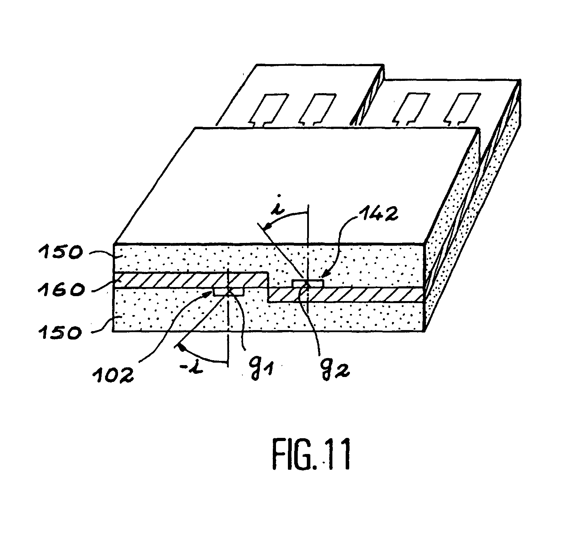

- la figure 11 montre l'ensemble obtenu après retournement et encastrement des deux barrettes.

### Exposé détaillé de modes de réalisation

Bien que toute tête magnétique puisse convenir à l'invention, on préfère utiliser des têtes dont le bobinage conducteur est du type solénoïde, par opposition aux têtes dont le bobinage est constitué par une ou des spirale(s) aplatie(s). La raison en est que l'encombrement latéral des premières est inférieur à celui des secondes et permet donc de rapprocher davantage les deux têtes.

Les figures 5 et 6 illustrent schématiquement un exemple de telles têtes à solénoïde. Sur la figure 5, on voit, en vue de dessus, une tête comprenant deux pièces polaires 50₁, 50₂ séparées par un entrefer amagnétique g, deux pièces magnétiques latérales 52₁, 52₂ et une pièce arrière 60 de fermeture du flux magnétique. Le bobinage conducteur est constitué par deux enroulements 54₁, 54₂ bobinés autour des deux pièces latérales 52₁, 52₂.

La figure 6 montre une vue d'ensemble de la tête sous la référence générale 70 et fait mieux apparaître les moyens de connexion électrique permettant d'avoir accès au bobinage. Ces moyens comprennent deux bandes conductrices 72₁, 72₂ et deux plots de connexion 74₁, 74₂.

Le procédé de réalisation collective de têtes doubles est alors illustré schématiquement sur les figures 7 à 10 dans le cas particulier d'une seule barrette et d'une seule contre-barrette. On voit tout d'abord sur la figure 7, une barrette A et une contre-barrette B. La barrette A contient une pluralité de premières têtes 80₁ analogues à la tête de la figure 6 et la contre-barrette B une pluralité de secondes têtes 80₂ symétriques de celle de la figure 6. Par ailleurs, la barrette A contient une pluralité de premiers emplacements vierges 90₁ et la contre-barrette B une pluralité de seconds emplacements vierges 90₂ (ces emplacements étant hâchurés sur la figure 7).

Dans le mode de réalisation illustré sur la figure 8, les têtes 80₁ et 80₂ sont montées tête-bêche et les têtes et les emplacements sont disposés en quinconce.

Les figures 8, 9 et 10 montrent de manière plus détaillée la structure des têtes et des logements pratiqués dans les emplacements vierges. Ces figures sont aussi bien valables pour un procédé individuel que pour un procédé collectif.

Sur les figures 8 et 10 tout d'abord, on voit une première tête, de référence générale 100, avec un ensemble 102 comprenant le circuit magnétique, l'entrefer azimuté et le bobinage, et deux plots de contacts 104₁, 104₂. A côté de cette tête, se trouve un premier logement gravé 120. Sur la figure 10, on voit mieux que la tête 100 est formée sur un premier substrat 150, par exemple en silicium, et recouverte d'une couche d'un premier isolant 160, par exemple de la silice. La couche isolante 160 peut avoir, par exemple, une épaisseur de 10 microns. Pour obtenir le premier logement 120, on grave à la fois la couche isolante 160 et le substrat 150, ce dernier, par exemple sur 10 microns, ce qui forme, dans ce cas particulier, un logement de profondeur 20 microns.

Sur la contre-barrette B, on note les mêmes moyens, à savoir une seconde tête, de référence générale 130, avec un ensemble 132 comprenant un circuit magnétique, un entrefer azimuté identique à l'entrefer de la première tête 102, et des plots de contact 134₁, 134₂. A côté de la seconde tête 130 se trouve un second logement 140. Sur la figure 9, on voit que cette seconde tête est formée sur le substrat 150 supportant la première tête, et est recouverte par la même couche isolante 160. Le logement 140 est obtenu en gravant la couche isolante 160 et le substrat 150 sur 10 microns, ce qui donne un logement de profondeur 20 microns, comme pour le premier logement 120. Ainsi, les reliefs et les creux de ces deux sous-ensembles sont-ils complémentaires.

Les figures 9 et 10 illustrent encore un mode particulier de réalisation qui permet de ramener les connexions de la seconde tête 130 sur la même face que celles de la première tête 100. Dans ce mode de réalisation, la contre-barrette présente une largeur plus faible que celle de la barrette. Pour ramener les connexions, une marche à un niveau intermédiaire est réalisée sur la barrette A. Cette marche porte la référence 110 sur les figures 8 et 10. Dans le mode de réalisation illustré, elle est située à 10 microns sous le niveau supérieur, c'est-à-dire juste à la surface du substrat 150. Sur cette marche 110, on forme des plots de reprise de contact 112₁, 112₂, dont l'espacement correspond à l'espacement des plots de connexion 134₁, 134₂ de la seconde tête (cf figure 9). Ces plots de reprise de contact 112₁, 112₂ sont reliés par des pistes de connexion 113₁, 113₂ à des plots de contact 114₁, 114₂ situés à côté des plots 104₁, 104₂ de la première tête.

Sur la contre-barrette, on grave le second substrat 150 pour former, à côté des secondes têtes 130, des seconds logements 140 aptes à recevoir les premières têtes 100 de la barrette A.

La seconde tête 130 ayant été retournée et introduite dans le premier logement 120, les plots 134₁, 134₂ vont venir en contact avec les plots de reprise de contact 112₁, 112₂, de sorte que les plots de connexion de la seconde tête, une fois en place, seront reportés sur les plots 114₁, 114₂.

La marche 110 peut contenir également des rainures 114 pour absorber les éventuels surplus de colle servant à solidariser les deux pièces.La colle peut être une colle conductrice. On peut y ajouter des billes conductrices qui s'écraseront lors de l'encastrement et assureront un bon contact électrique entre les plots 134₁, 134₂ et 112₁, 112₂.

Après retournement par rotation d'un angle π de la contre-barrette B autour de l'axe xx' (figure 7) et encastrement des deux barrettes, on obtient l'ensemble représenté sur la figure 11. On y voit une première tête 102 avec son entrefer azimuté g₁, disposée sur le substrat 150 et recouverte de la couche isolante 160 et une seconde tête 142 avec son entrefer g₂ azimuté dans une direction opposée, avec son substrat 150 retourné et sa couche isolante 160 retournée. Les deux pièces sont encastrées l'une dans l'autre. Comme elles sont complémentaires l'une de l'autre, elles forment une tête monobloc.

L'ensemble ainsi obtenu sera ensuite découpé pour séparer les têtes doubles monobloc dans le cas de traitement collectif (par barrettes ou plaque entière par exemple). Chaque tête comprend alors un bloc de silicium enfermant en son milieu une tête double. Chaque tête peut ensuite être usinée par des opérations de micromécanique classiques pour lui donner la forme désirée.

On peut bien entendu réaliser également la découpe des têtes avant assemblage.

Dans le mode de mise en oeuvre qui vient d'être décrit, on peut utiliser un seul substrat pour réaliser la barrette et la contre-barrette. Cette variante est avantageuse, car elle permet d'obtenir une homogénéité de caractéristiques pour les différentes têtes; surtout pour celles qui sont en regard l'une de l'autre. Mais on pourrait naturellement dissocier la réalisation de la barrette et celle de la contre-barrette.

Après cette description, on comprend mieux que l'invention apporte de nombreux avantages :
- elle permet une fabrication collective de têtes doubles azimutées monobloc avec une technologie de couches minces sur silicium, associée à quelques étapes d'assemblage mécanique, barrette par barrette ou plaque par plaque ; le gain en coût peut être appréciable en production de masse ;
- elle résout les problèmes d'alignements angulaire et latéral d'une tête par rapport à l'autre en définissant les plans de référence d'assemblage par des procédés de gravure microélectronique extrêmement précis ; le joint de colle entre les deux parties à assembler peut ne pas excéder quelques dixièmes de micromètre, ce qui entre tout à fait dans les tolérances des systèmes concernés, tant au niveau de l'angle introduit entre les deux têtes que de l'écart latéral (entraînant une erreur sur la largeur de piste du signal) ;
- le montage d'une tête double monobloc obtenue par l'invention, dans un système d'enregistrement, devient aussi simple que le montage d'une tête unique réduisant ainsi le coût de cette opération de manière conséquente
- l'homogénéité de caractéristiques des têtes est excellente, lorsque les deux têtes assemblées étaient voisines l'une de l'autre lors de leur fabrication sur silicium ;
- enfin, les bonnes propriétés tribologiques du silicium encapsulant les têtes entraîneront une usure douce et régulière de ces dernières durant leur durée de vie.

## Revendications

1. Procédé de réalisation selon une technologie en couche mince d'une tête magnétique double à deux entrefers d'azimuts opposés, le procédé comprenant les opérations suivantes :
- sur un premier substrat (150) on forme une première tête magnétique (100) avec un premier entrefer (91) ayant un certain angle d'inclinaison apte à conduire à un premier angle d'azimut,
- sur un second substrat (150) on forme une seconde tête magnétique (130) présentant un second entrefer (92) ayant un angle d'inclinaison identique à l'angle d'inclinaison du premier entrefer et apte à conduire à un second angle d'azimut opposé au premier,
**caractérisé en ce que** :
- sur le premier substrat (150) à côté de la première tête (100) on grave un premier logement (120) apte à recevoir la seconde tête (130) et sur le second substrat (150) à côté de la seconde tête (130) on grave un second logement (140) apte à recevoir la première tête (100),
- on retourne l'une des têtes (130),
- on emboîte la première tête (100) dans le second logement (140) et la seconde tête (130) dans le premier logement, de façon à ce que leurs angles d'inclinaison soient opposés dans un référentiel commun et conduisent à des angles d'azimut opposés,
- on solidarise l'ensemble obtenu.

2. Procédé selon la revendication 1, **caractérisé en ce que** le second substrat est confondu avec le premier.

3. Procédé collectif de réalisation, selon une technologie en couche mince, de têtes magnétiques doubles à entrefers azimutés opposés, le procédé comprenant les opérations suivantes :
- sur un premier substrat (150), on réalise au moins une barrette (A) d'un premier groupe de premières têtes magnétiques (100) comprenant un premier entrefer (91) présentant un premier angle d'inclinaison apte à conduire à un premier angle d'azimut,
- sur un second substrat (150) on réalise au moins une contre-barrette (B) d'un second groupe de secondes têtes magnétiques (130) comprenant un second entrefer (92) présentant un second angle d'inclinaison identique à l'angle d'inclinaison du premier entrefer et apte à conduire à un second angle d'azimut opposé au premier,
**caractérisé en ce que** :
- on grave le premier substrat (150) de la barrette (A) pour former, à côté des premières têtes (100), des premiers logements (120) aptes à recevoir les secondes têtes (130) de la contre-barrette (B),
- on grave le second substrat (150) de la contre-barrette (B) pour former, à côté des secondes têtes (130), des seconds logements (140) aptes à recevoir les premières têtes (100) de la barrette (A),
- on retourne la contre-barrette (B) et on l'applique sur la barrette (A), chaque seconde tête (130) de la contre-barrette (B) venant se loger dans un des premiers logements (120) de la barrette (A) et chaque première tête (100) de la barrette (A) venant se loger dans des seconds logements (140) de la contre-barrette (B), de façon à ce que les premiers et seconds angles d'inclinaison soient opposés dans un référentiel commun et conduisent à des premiers et seconds angles d'azimut opposés,
- on solidarise la barrette (A) et la contre-barrette (B),
- on sépare les uns des autres les ensembles formés d'une première tête et d'une seconde tête adjacente, ce qui donne des têtes doubles (102, 142) à entrefers d'azimuts opposés (91, 92).

4. Procédé selon la revendication 3, **caractérisé en ce que** le second substrat est confondu avec le premier.

5. Procédé selon la revendication 3 ou 4, **caractérisé par le fait que** les premières têtes (100) de la barrette (A) et les secondes têtes (130) de la contre-barrette (B) sont disposées en deux rangées parallèles, en position tête-bêche et en quinconce, le premier substrat (150) servant à réaliser la barrette (A) et le second substrat (150) servant à réaliser la contre-barrette (B) étant un seul et même substrat (150).

6. Procédé selon la revendication 3 ou 4, **caractérisé par le fait que** l'on solidarise la barrette (A) et la contre-barrette (B) par collage.

7. Procédé selon la revendication 3 ou 4, **caractérisé par le fait que** :
- les premières têtes (100) de la barrette (A) sont disposées dans une première couche d'isolant (160), formée sur le premier substrat,
- les secondes têtes (130) de la contre-barrette (B) sont disposées dans une seconde couche d'isolant (160), formée sur le second substrat,
- on grave la première couche d'isolant (160) et le premier substrat (150) pour former les premiers logements (120),
- on grave la seconde couche d'isolant (160) et le second substrat (150) pour former les seconds logements (140), la barrette (A) et la contre-barrette (B) présentant des profils complémentaires s'emboîtant l'un dans l'autre.

8. Procédé selon la revendication 3 ou 4, **caractérisé par le fait qu'**on réalise les premières têtes magnétiques (100) avec un premier circuit magnétique (50₁, 50₂, 52₁, 52₂, 60) et un premier bobinage conducteur (54₁, 54₂) enroulé autour d'une partie du premier circuit magnétique et qu'on réalise les secondes têtes magnétiques (130) avec un second circuit magnétique (50₁, 50₂, 52₁, 52₂, 60) et un second bobinage conducteur (54₁, 54₂) enroulé autour d'une partie du second circuit magnétique.

9. Procédé selon la revendication 8, **caractérisé par le fait que** :
- on grave la seconde couche isolante (160) de la contre-barrette (B) pour dégager des plots de connexion (134₁, 134₂) du second bobinage des secondes têtes (130),
- on grave en outre le premier isolant (160) et éventuellement le premier substrat (150) de la barrette (A) une marche (110) jusqu'à un niveau de profondeur inférieure à la profondeur des premiers logements (120),
- on forme sur cette marche (110) de la barrette (A) des plots de reprise de contact (112₁, 112₂) dont l'espacement correspond aux plots de connexion (134₁, 134₂) du second bobinage des secondes têtes (130) de la contre-barrette (B), de telle sorte que lorsque la contre-barrette (B) sera retournée puis appliquée sur la barrette (A), les plots de connexion (134₁, 134₂) des secondes têtes (130) viendront en contact électrique avec les plots de reprise de contact (112₁, 112₂) de la barrette (A), et on forme sur cette marche (110) de la barrette (A), des seconds plots de connexion (114₁, 114₂), les plots de connexion (104₁, 104₂) des premières têtes (100) et les seconds plots de connexion (114₁, 114₂) des secondes têtes (130) étant alors disposés du même côté et sur la même face de la tête double.

10. Procédé selon la revendication 9, dans laquelle, on forme en outre, sur la marche (110) des rainures (114).

## Patentansprüche

1. Verfahren zur Dünnschichttechnik-Herstellung eines Doppel-Magnetkopfs mit zwei Spalten mit entgegengesetzten Azimuten, das die folgenden Operationen umfasst:
- auf einem ersten Substrat (150) bildet man einen ersten.Magnetkopf (100) mit einem ersten Spalt (g₁), der einen bestimmten, zu einem ersten Azimutwinkel führenden Neigungswinkel hat,
- auf einem zweiten Substrat (150) bildet man einen zweiten Magnetkopf (130) mit einem zweiten Spalt (g₂), der einen mit dem Neigungswinkel des ersten Spalts identischen zweiten Neigungswinkel aufweist und zu einem zweiten, dem ersten entgegengesetzten Azimutwinkel führt,
**dadurch gekennzeichnet,**
- **dass** man auf dem ersten Substrat (150), neben dem ersten Kopf (100), einen ersten Sitz (120) ätzt, fähig den zweiten Kopf (130) aufzunehmen, und auf dem zweiten Substrat (150), neben dem zweiten Kopf (130), einen zweiten Sitz (140) ätzt, fähig den ersten Kopf (100) aufzunehmen,
- **dass** man einen der Köpfe (130) umdreht,
- **dass** man den ersten Kopf (100) in den zweiten Sitz (140) einfügt und den zweiten Kopf (130) in den ersten Sitz, so dass ihre Neigungswinkel in einem gemeinsamen Bezugssystem entgegengesetzt sind und zu entgegengesetzten Azimutwinkeln führen,
- dass man das gebildete Ganze verbindet.

2. Verfahren nach Anspruch 1, **dadurch gekennzeichnet, dass** das zweite Substrat mit dem ersten zusammenfällt.

3. Kollektives Dünnschichttechnik-Herstellungsverfahren von Doppel-Magnetköpfen mit Spalten mit entgegengesetzten Azimuten, das die folgenden Operationen umfasst:
- man realisiert auf einem ersten Substrat. (150) wenigstens eine Anordnung (A) einer ersten Gruppe von Magnetköpfen (100) mit einem ersten Spalt (g₁), der einen zu einem ersten Azimutwinkel führenden ersten Neigungswinkel aufweist,
- man realisiert auf einem zweiten Substrat (150) wenigstens eine Gegenanordnung (B) einer zweiten Gruppe von Magnetköpfen (130) mit einem zweiten Spalt (g₂), der einen mit dem Neigungswinkel des ersten Spalts identischen zweiten Neigungswinkel aufweist und zu einem zweiten, dem ersten entgegengesetztem Azimutwinkel führt,
**dadurch gekennzeichnet:**
- **dass** man auf dem ersten Substrat (150) der Anordnung (A), neben dem ersten Kopf (100), erste Sitze (120) ätzt, fähig die zweiten Köpfe (130) der Gegenanordnung (B) aufzunehmen,
- **dass** man auf dem zweiten Substrat (150) der Gegenanordnung (B), rieben den zweiten Köpfen (130), zweite Sitze (140) ätzt, fähig die ersten Köpfe (100) der Anordnung (A) aufzunehmen,
- **dass** man die Gegenanordnung (B) umdreht und auf der Anordnung (A) anbringt, wobei jeder zweite Kopf (130) der Gegenanordnung (B) sich in einen der ersten Sitze (120) der Anordnung (A) setzt, und jeder erste Kopf (100) der Anordnung (A) sich in einen der zweiten Sitze (140) der Gegenanordnung (B) setzt, so dass die ersten und zweiten Neigungswinkel in einem gemeinsamen Bezugssystem entgegengesetzt sind und zu entgegengesetzten ersten und zweiten Azimutwinkeln führen,
- **dass** man die Anordnung (A) und die Gegenanordnung (B) miteinander verbindet,
- **dass** man die durch einen ersten Kopf und einen angrenzenden zweiten Kopf gebildeten Einheiten voneinander trennt, so dass man Doppelköpfe (102, 142) mit Spalten (g₁, g₂) mit entgegengesetzten Azimuten bzw. Azimutwinkeln erhält.

4. Verfahren nach Anspruch 3, **dadurch gekennzeichnet, dass** das zweite Substrat mit dem ersten zusammenfällt.

5. Verfahren nach Anspruch 3 oder 4, **dadurch gekennzeichnet, dass** die ersten Köpfe (100) der Anordnung (A) und die zweiten Köpfe (130) der Gegenanordnung (B) zu zwei parallelen Reihen angeordnet sind, in entgegengesetzter Stellung und gegeneinander versetzt, wobei das erste Substrat (150), das dazu dient, die Anordnung (A) zu realisieren, und das zweite Substrat (150), das dazu dient, die Gegenanordnung (B) zu realisieren, ein und dasselbe Substrat (150) ist.

6. Verfahren nach Anspruch 3 oder 4, **dadurch gekennzeichnet, dass** man die Anordnung (A) und die Gegenanordnung (B) durch Klebung miteinander verbindet.

7. Verfahren nach Anspruch 3 oder 4, **dadurch gekennzeichnet:**
- **dass** die ersten Köpfe (100) der Anordnung (A) in einer auf dem ersten Substrat gebildeten ersten Isolierschicht (160) angeordnet sind,
- **dass** die zweiten Köpfe (130) der Gegenanordnung (B) in einer auf dem zweiten Substrat gebildeten zweiten Isolierschicht (160) angeordnet sind,
- **dass** man die erste Isolierschicht (160) und das erste Substrat (150) ätzt, um die ersten Sitze (120) zu bilden,
- **dass** man die zweite Isolierschicht (160) und das zweite Substrat (150) ätzt, um die zweiten Sitze (140), die Anordnung (A) und die Gegenanordung (B) zu bilden, wobei die Anordnung (A) und die Gegenanordnung (B) komplementäre, sich ineinanderfügende Profile aufweisen.

8. Verfahren nach Anspruch 3 oder 4, **dadurch gekennzeichnet, dass** man die ersten Magnetköpfe (100) mit einem ersten Magnetkreis (50₁, 50₂, 52₁, 52₂, 60) und einer ersten leitenden Wicklung (54₁, 54₂) realisiert, die um einen Teil des ersten Magnetkreises gewickelt ist, und dass man die zweiten Magnetköpfe (130) mit einem zweiten Magnetkreis (50₁, 50₂, 52₁, 52₂, 60) und einer zweiten leitenden Wicklung (54₁, 54₂) realisiert, die um einen Teil des zweiten Magnetkreises gewickelt ist.

9. Verfahren nach Anspruch 8, **dadurch gekennzeichnet:**
- **dass** man die zweite Isolierschicht (160) der Gegenanordnung (B) ätzt, um Anschlussstellen (134₁, 134₂) der zweiten Wicklung der zweiten Köpfe (130) freizulegen,
- **dass** man außerdem in die erste Isolierschicht (160) und eventuell in das erste Substrat (150) der Anordnung (A) eine Stufe (110) bis auf ein Tiefenniveau ätzt, das niedriger ist als die Tiefe der ersten Sitze (120),
- **dass** man in dieser Stufe (110) der Anordnung (A) Kontaktaufnahmestellen (112₁, 112₂) bildet, deren Abstand den Anschlussstellen (134₁, 134₂) der zweiten Wicklung der zweiten Köpfe (130) der Gegenanordnung (B) entspricht, so dass die Anschlussstellen (134₁, 134₂) der zweiten Köpfe (130) in elektrischen Kontakt kommen mit den Kontaktaufnahmestellen (112₁, 112₂) der Anordnung (A), wenn die Gegenanordnung (B) umgedreht und dann auf der Anordnung (A) angebracht wird, wobei dann die Anschlussstellen (134₁, 134₂) der zweiten Köpfe (130) elektrischen Kontakt haben mit den Kontaktaufnahmestellen (112₁, 112₂) der Anordnung, (A),
und man in dieser Stufe (110) der Anordnung (A) zweite Anschlussstellen (114₁, 114₂) bildet, wobei die Anschlussstellen (104₁, 104₂) der ersten Köpfe (100) und die zweiten Anschlussstellen (114₁, 114₂) der zweiten Köpfe (130) sich dann auf derselben Seite und in derselben Fläche des Doppelkopfes befinden.

10. Verfahren nach Anspruch 9, in dem man außerdem in der Stufe (110) Rillen (114) ausbildet.

## Claims

1. Process for the production of a double magnetic head with two head gaps having opposite azimuths, the process comprising the following operations:
- on a first substrate (150) is formed a first magnetic head (100) with a first head gap (91) having a certain inclination angle able to lead to a first azimuth angle,
- on a second substrate (150), optionally coinciding with the first, is formed a second magnetic head (130) having a second head gap (92) with an inclination angle able to lead to a second azimuth angle opposite to the first,
**characterized in that**:
- on the first substrate (150) alongside the first head (100) is etched a first recess (120) able to receive the second head (130) and on the second substrate (150) alongside the second head (130) is etched a second recess (140) able to receive the first head (100),
- one of the heads (130) is reversed,
- the first head (100) is fitted in the second recess (140) and the second head (130) in the first recess, so that their inclination angles are opposed in a common reference frame and lead to opposite azimuth angles,
- the assembly obtained is joined together.

2. Process according to claim 1, **characterized in that** the second substrate coincides with the first.

3. Process for the collective production of double magnetic heads with head gaps and opposite azimuths, the process comprising the following operations:
- on a first substrate (150) is produced at least one array (A) of a first group of first magnetic heads (100) having a first head gap (91) with a first inclination angle able to lead to a first azimuth angle,
- on a second substrate (150), optionally coinciding with the first, is produced at least one counterarray (B) of a second group of second magnetic heads (130) having a second head gap (92) with a second inclination angle able to lead to a second azimuth angle opposite to the first,
**characterized in that**:
- the first substrate (150) of the array (A) is etched so as to form, alongside the first heads (100), first recesses (120) able to receive the second heads (130) of the counterarray (B),
- the second substrate (150) of the counterarray is etched to form, alongside the second heads (130), second recesses (140) able to receive the first heads (100) of the array (A),
- the counterarray (B) is reversed and applied to the array (A), each second head (130) of the counterarray (B) being fitted into one of the first recesses (100) of the array (A) and each first head (100) of the array (A) being fitted into second recesses (140) of the counterarray (B), so that the first and second inclination angles are opposed in a common reference frame and lead to first and second opposite azimuth angles,
- the array (A) and the counterarray (B) are joined together,
- the assemblies forming a first head and a second adjacent head are separated from one another, which give double heads (102, 142) with head gaps (91, 92) having opposite azimuths.

4. Process according to claim 3, **characterized in that** the second substrate coincides with the first.

5. Process according to claim 3 or 4, **characterized in that** the first heads (10) of the array (A) and the second heads (130) of the counterarray (B) are placed in two parallel rows, head to tail and in staggered manner, the first substrate (150) being used for producing the array (A) and the second substrate (150) for producing the counterarray (B) being one and the same substrate (150).

6. Process according to claim 3 or 4, **characterized in that** the array (A) and counterarray (B) are joined together by adhesion.

7. Process according to claim 3 or 4, **characterized in that**:
- the first heads (100) of the array (A) are placed in a first insulating layer (160) formed on the first substrate,
- the second heads (130) of the counterarray (B) are placed in a second insulating layer (160) formed on the second substrate,
- the first insulating layer (160) and the first substrate (150) are etched to form first recesses (120),
- the second insulating layer (160) and the second substrate (150) are etched to form second recesses (140), the array (A) and the counterarray (B) having complimentary profiles fitting into one another.

8. Process according to claim 3 or 4, **characterized in that** first magnetic heads (100) are produced with a first magnetic circuit (50₁, 50₂, 52₁, 52₂, 60) and a first conductor coil (54₁, 54₂) wound around part of the first magnetic circuit and second magnetic heads (130) are produced with a second magnetic circuit (50₁, 50₂, 52₁, 52₂, 60) and a second conductor coil (54₁, 54₂) wound around a part of the second magnetic circuit.

9. Process according to claim 8, **characterized in that**:
- the second insulating layer (160) of the counterarray (B) is etched in order to free connection pieces (134₁, 134₂) of the second coil of the second heads (130),
- the first insulant (160) and optionally the first substrate (150) of the array (A) are etched to form a step (110) up to a depth level lower than the depth of the first recesses (120),
- on said step (110) of the array (A) are formed contact resumption pieces (112₁, 112₂), whose spacing corresponds to the connection pieces (134₁, 134₂) of the second coil of the second heads (130) of the counterarray (B), so that when the counterarray (B) is reversed and then applied to the array (A), the connection pieces (134₁, 134₂) of the second heads (130) will come into electrical contact with the contact resumption pieces (112₁, 112₂) of the array (A) and on said step (110) of the array (A) are formed second connection pieces (114₁, 114₂), the connection pieces (104₁, 104₂) of the first heads (100) and the second connection pieces (114₁, 114₂) of the second heads are then located on the same side and on the same face of the double head.

10. Process according to claim 9, wherein grooves (114) are also formed on the step (110).
